# EUROPÄISCHE PATENTANMELDUNG

(11) **EP 2 543 949 A2**
(43) Veröffentlichungstag der Anmeldung: **09.01.2013**
(21) Anmeldenummer: 12175312.3
(22) Anmeldetag: 06.07.2012
(51) Int. Cl.: F28D 20/02, F28D 20/00

(54) **Wärmespeicher mit einem teilweise mit Fluid gefüllten Behälter**

(30) Priorität: 06.07.2011 DE 102011107270
(71) Anmelder: Solvis GmbH & Co. KG, 38112 Braunschweig (DE)
(72) Erfinder: Jäger, Helmut, 38533 Vordorf (DE); Wendker, Kai, 38106 Braunschweig (DE); Müller, Michael Klemens, 67454 Haßloch (DE); Tedy, Juniko, 68199 Mannheim (DE); Rädle, Matthias, Dr., 67273 Weisenheim/Berg (DE)
(74) Vertreter: Einsel, Martin

(57) **Zusammenfassung**

Ein Wärmespeicher besitzt einen teilweise mit Fluid (11) gefüllten Behälter (10). Vorgesehen ist ferner eine Anordnung mit Phasenwechselmaterial (20), welches zur Speicherung von Energie eingesetzt wird. Als Phasenwechselmaterial (20) wird eine Mischung aus zwei oder mehr Stoffen eingesetzt. Die Mischung weist ein Mischungsverhältnis auf, welches am Punkt des Eutektikums der beteiligten Stoffe oder innerhalb einer Abweichung von +/- 50% bezüglich der Konzentrationen der beteiligten Stoffe liegt. Die Mischung weist einen Schmelzpunkt im Bereich zwischen 50 °C und 70 °C auf.

## Beschreibung

Die Erfindung betrifft einen Wärmespeicher, mit einem teilweise mit Fluid gefüllten Behälter, mit einer Anordnung mit Phasenwechselmaterial, welcher zur Speicherung von Energie eingesetzt wird.

Wärmespeicher dienen insbesondere zu Heizungszwecken sowie dazu, Warmwasser für verschiedenste Zwecke zur Verfügung zu stellen, insbesondere in Haushalten, aber auch für gewerbliche Anwendungsbereiche.

Während herkömmlich mittels Gas- und Ölheizungen Fluide, in erster Linie Wasser, aufgewärmt und dann als Reservoir für anschließende Verwendung genutzt wurde, gibt es zunehmend auch die Möglichkeit, alternativ oder zusätzlich zu diesen Wärmequellen für die Fluide auch Wärmequellen zu nutzen, die nur zeitweise zur Verfügung stehen, beispielsweise solarthermische Anlagen.

Allen Anlagen ist gemeinsam, dass die entsprechenden Speicherbehälter relativ viel Platz beziehungsweise Raum einnehmen. Die Wärmeaufnahmekapazität von Wasser und vergleichbaren Fluiden ist begrenzt und von der möglichen Temperaturerhöhung abhängig, die durch die solarthermische oder sonstige Wärmeeinkopplung in das Fluid möglich ist.

Es gibt bereits Ansätze, gegenüber derartigen Warmwasserspeichern eine erhöhte Speicherdichte zu erreichen. Diese höhere Speicherdichte kann man durch den Einsatz sogenannter Phasenwechselmaterialien anstreben, häufig als PCM (Phase Change Materials) abgekürzt. Mit diesen Phasenwechselmaterialien lassen sich sogenannte Latentwärmespeicher aufbauen.

Dabei sind Phasenwechselmaterialien Stoffe, die eingesetzt werden, um den Wärmeinhalt bei Aggregatänderung für Wärmespeicherung zu nutzen. Bekannte derartige Stoffe sind beispielsweise Paraffin, welches im Bereich der Raumklimatisierung eingesetzt wird. Hierbei wird bei Temperaturen über 30 °C ein Phasenübergang herbeigeführt, der bei Erwärmung von fest nach flüssig unter Wärmeaufnahme ohne gleichzeitige Temperaturerhöhung, und bei Abkühlung etwa aufgrund von Wärmeabgabe an die Umgebung mit einer Kristallisation bei nahezu der gleichen und während des Vorgangs konstant bleibenden Temperatur stattfindet.

Vorschläge wie etwa in der DE 295 12 743 U1 arbeiten mit Phasenwechselmaterial, welches in Form einer Schüttung im Inneren eines Speicherbehälters angeordnet wird. In der DE 195 02 507 C2 wird ein Speicherbehälter vorgeschlagen, in welchem zylinderförmige, an ihrer Stirnfläche unverschlossene Behälter mit ihrer Öffnung nach unten weisend in einem Speicherbehälter angeordnet werden und dort von Wasser oder einem anderen Wärmeträgermedium umströmt werden.

Bei derartigen Konzepten muss darauf geachtet werden, dass das Phasenwechselmaterial keine chemischen Reaktionen mit dem Fluid eingeht und sich in diesem auch nicht löst.

Andere Konzepte wie in der DE 33 22 956 A1 oder der DE 43 15 492 C2 vorgeschlagen, arbeiten mit kleinen kugelförmigen oder konisch nach oben erweiterten topfförmigen Behältern, in denen das Phasenwechselmaterial eingeschlossen wird, sodass keine chemischen Reaktionen oder Löseeffekte eintreten können. Die vorgeschlagenen Anordnungen sind relativ kompliziert und kostspielig und haben sich daher in der Praxis nicht durchgesetzt. Hinzu kommt, dass erhebliche und konkrete Anforderungen an den Aufbau der Speicherbehälter selbst gestellt werden. Das schränkt die Möglichkeiten einer Kombination mit anderen sinnvollen oder vom Verbraucher gewünschten Konzepten in den Speicherbehältern deutlich ein und führt dazu, dass solche Vorschläge ohnehin nur als Spezialbauten in Betracht kommen könnten.

Obwohl es Ansätze in Hülle und Fülle gibt, diese Phasenwechselmaterialien zu Wärmespeicherungszwecken einzusetzen, so zeigen sich in der breiten Anwendung wenig erfolgreiche Fälle. Dies hängt damit zusammen, dass die eingesetzten Materialien in der üblichen Produktion zur Anwendung im heutigen Umfeld zu exotisch, zu kompliziert zu gewinnen oder einzusetzen, damit zu teuer oder zu gefährlich sind.

Wünschenswert wäre es, wenn Wärmespeicher beziehungsweise Speicherbehälter in Kombination mit den vorteilhaften Phasenwechselmaterialien so aufgebaut werden könnten, dass weniger Anforderungen an den Aufbau der Speicherbehälter selbst gestellt werden, gleichwohl aber ein besonders günstiges Kosten/Nutzen-Verhältnis bei einer zusätzlichen Ausstattung mit Phasenwärmematerialien erreicht wird.

Diese Aufgabe wird gemäß der Erfindung bei einem gattungsgemäßen Wärmespeicher dadurch gelöst, dass als Phasenwechselmaterial eine Mischung aus zwei oder mehr Stoffen eingesetzt wird, dass die Mischung ein Mischungsverhältnis aufweist, welches am Punkt des Eutektikums der beteiligten Stoffe oder innerhalb einer Abweichung von +/- 50% davon bezüglich der Konzentrationen der beteiligten Stoffe liegt, und dass die Mischung einen Schmelzpunkt im Bereich zwischen 50 °C und 70 °C aufweist.

Erfindungsgemäß wird davon Gebrauch gemacht, dass gegenüber dem bekannten Stand der Technik eine verbesserte Wärmespeicherung erreicht werden kann, wenn Phasenwechselmaterialien in einer bestimmten Auswahl in oder an Wärmespeichern, insbesondere in oder an sogenannten Schichtwärmespeichern eingesetzt werden.

Erfindungsgemäß wird jetzt vorteilhaft genutzt, dass speziell für den Einsatz in relativ großvolumigen Wärmespeichern für Heizungszwecke eine sehr einfache Kombination von großtechnisch herstellbaren Materialien zur Verfügung steht, deren Nutzung bisher noch gar nicht für Heizungs- oder Warmwasserbereitungsanlagen in Betracht gezogen worden ist.

Überraschend hat es sich in Versuchen gezeigt, dass gerade eine Mischung verschiedener Stoffe im Bereich ihres Eutektikums besonders geeignet ist, die Anforderungen an ein Phasenwechselmaterial zu erfüllen, welches zum Einsatz in oder an Wärmespeichern dient. Mischungen aus verschiedenen Stoffen stellen an sich für den Fachmann eine wenig attraktive und wünschenswerte Möglichkeit dar. Zwar mag jeder Stoff für sich als Phasenwechselmaterial geeignet sein, die Eigenschaften der verschiedenen Stoffe unterscheiden sich jedoch und machen das Verhalten einer Mischung komplizierter. Darüber hinaus besitzen dann verschiedene Stoffe unterschiedliche Schmelztemperaturen, so dass gerade die bei einem Phasenwechselmaterial besonders gewünschte und angestrebte Verhaltensweise, nämlich der Phasenübergang bei konstanter Temperatur und gleichzeitiger Energieaufnahme beziehungsweise Abgabe, nur von einem Teil der gewünschten Stoffmischung vollzogen wird und somit das Gesamtverhalten schwächer ausfällt.

Erfindungsgemäß werden jedoch gerade Mischungen eingesetzt, bei denen die Zusammensetzung mehrerer Stoffe so aufgebaut ist, dass die Mischungsverhältnisse mehr oder weniger nahe am Eutektikum liegen. In Betracht kommen also Mischungen von Stoffen, die ein solches Eutektikum bilden.

In der Nähe des Eutektikums verhalten sich diese Mischungen weitgehend stabil, wenn sich eine Phasenänderung ereignen soll. Das bedeutet, dass die beiden Stoffe gemeinsam schmelzen beziehungsweise gemeinsam in die feste Phase übergehen, wenn die Temperatur steigt beziehungsweise fällt.

Durch dieses gemeinsame Erleben eines Phasenübergangs wird eine Entmischung vermieden. Die beiden Stoffe trennen sich also nicht durch den unterschiedlichen Phasenübergang in einen schwereren, nach unten sinkenden und einen leichteren, nach oben aufsteigenden Bestandteil, sondern sie bleiben als Mischung erhalten, so dass auch das Eutektikum bestehen bleibt.

Dadurch, dass keine Entmischung stattfindet, bilden sich auch nicht etwa Bereiche aus dem Phasenwechselmaterial, die deutlich unterschiedliche Schmelztemperaturen aufweisen und somit den angestrebten Effekt eines Phasenwechselmaterials unterlaufen würden. Stattdessen bleibt die Mischung auch genau in dem Mischungsverhältnis bestehen, das zuvor bestand, so dass das Eutektikum und die mit dem stabilen Mischungsverhältnis eingestellte Schmelztemperatur dauerhaft so stabil bleibt.

Zusätzlich hat sich gezeigt, dass eine strikte Anforderung an das Einhalten einer exakten Mischung zur Erreichung eines Eutektikums gerade eben nicht besteht. Leichte Verschiebungen auch innerhalb des Phasenwechselmaterials sind sogar eher günstig. Sie führen nämlich dazu, dass verschiedene Bereiche des Phasenwechselmaterials bei ganz leicht unterschiedlichen Temperaturen den Phasenwechsel durchlaufen. Natürlich sollte der Bereich des Eutektikums nicht völlig verlassen werden, so dass es besonders bevorzugt ist, wenn die Konzentrationsverschiebungen innerhalb nicht nur eines Bereiches von +/- 50%, sondern innerhalb von +/- 20% oder mehr noch innerhalb von +/- 10% angesiedelt sind.

Gerade durch dieses etwas unkritische und Ungenauigkeiten sogar in gewissem Rahmen nicht nur tolerierende, sondern wünschende System ergeben sich darüber hinaus besonders günstige Herstellungsbedingungen für eine entsprechend zu produzierende Mischung.

Ein bevorzugtes Beispiel sind Mischungen von Salzen, die auch in anderen Industriezweigen eingesetzt werden. In besonderer Weise sind hier die Salze Magnesiumchlorid und Magnesiumnitrat zu nennen, die als unterschiedliche Kristallformationen vorliegen können. Beide Salze können einzeln als Anhydrat oder in verschiedenen Hydratationsformen vorliegen. Alle Hydratationsformen haben unterschiedliche Schmelzpunkte.

Andere Salze, die in diesem Zusammenhang einsetzbar sind, sind zum Beispiel Magnesiumnitrit, Magnesiumsulfat, Natriumnitrat, Natriumnitrit sowie Eisenchlorid, Eisensulfat oder auch Mischungen aus diesen beiden letzteren Komponenten.

Als wirtschaftlich interessant und grundsätzlich einsetzbar haben sich auch Stoffe und ihre Mischungen im Bereich des Eutektikums erwiesen, die im weitesten Bereich aus dem Düngemittelbereich bekannt sind. Dies sind zum Beispiel Harnstoff, Kalziumnitrat, Ammoniumsulfat, Ammoniumnitrat, Kalziumchlorid oder auch Mischungen etwa aus Ammoniumnitrat und Harnstofflösung. Alle diese Phasenwechselmaterialien beziehungsweise Latentwärmespeicher oder Phasenübergangsmaterialien sind recht preiswerte Stoffe aus der organischen und anorganischen Chemie.

Auch bei diesen Stoffen ist es möglich, sie als Lösung mit Bodenkörpern oder nicht exakte Mischungen im Bereich des Eutektikums einzusetzen, also mit nicht exakt festgelegter Schmelztemperatur im klassischen Sinne eines Phasenübergangsmaterials. Auf diese Weise kann die einzuspeichernde Wärmeenergie nicht bei einer exakt festen Temperatur eingespeichert werden, sondern abhängig von der konkreten, aktuellen Temperatur geht ein unterschiedlicher Anteil des Gemisches in Lösung. Bei Mischungen unter Einsatz von Harnstoff kann beispielsweise berücksichtigt werden, dass Harnstoff bei Raumtemperatur löslich mit Gewichtsanteilen 1/1 ist, bei 70 °C sich dagegen sieben Teile Harnstoff in einem Teil Wasser lösen.

Für die technischen Einsatzzwecke ist es wie bereits angedeutet aus Kostengründen vorteilhaft, wenn die beiden (oder mehr) Bestandteile, beispielsweise Salze, der Mischung nicht von hoher Reinheit sind. Dadurch können Phasenwechselmaterialien zum Einsatz kommen, die in anderen Industriezweigen als Abfallprodukte vorkommen. Beispielsweise kann in diesem Zusammenhang eine Salzmischung mit unter anderem Eisenchloridsulfat genutzt werden, die im Kläranlagenbereich zur Flockungsunterstützung dient und weitläufig verfügbar ist.

Die erfindungsgemäße Konzeption ist insbesondere für Wärmespeicher geeignet, die als sogenannte Schichtenspeicher aufgebaut sind. Damit sind die erfindungsgemäßen Konzepte insbesondere für Speichersysteme von solarthermischen Anlagen geeignet.

Solche Anlagen sind beispielsweise aus der E P 0 384 423 B 1 , der EP 1 170 554 B1 und der EP 2 138 776 A2 bekannt. In einem Speicherbehälter, der als Warmwasserspeicher ausgebildet ist, werden mittels einer Ladewechselvorrichtung Fluide in einer bestimmten Schichthöhe eingespeichert, die genau ihrer eigenen Temperatur entspricht. Dadurch wird eine Durchmischung des Fluides im Inneren des Warmwasserspeichers vermieden.

Besonders bevorzugt ist es, wenn in dem Behälter innerhalb des Fluides eine Vielzahl von gegenüber dem Fluid dicht abgeschlossenen, mit diesem aber wärmeleitend in Verbindung stehenden Körpern vorgesehen ist, dabei die Körper einen inneren Hohlraum aufweisen und der Hohlraum zumindest teilweise mit der Mischung mit dem Phasenwechselmaterial gefüllt ist.

Das bedeutet, dass die Mischung mit dem Phasenwechselmaterial im Inneren des Körpers die Temperatur des Fluides in der Umgebung des Körpers annimmt. Handelt es sich um einen Wärmespeicher einer Heizungsanlage, liegen die Temperaturen des Fluides in den verschiedenen Schichten etwa eines Schichtenspeichers zwischen der Temperatur kalten Wassers in den untersten Schichten und heißen Wassers in den obersten Schichten des Fluides.

Bevorzugt wird man daher eine Mischung mit einem Schmelzpunkt im Bereich zwischen 52 °C und 65 °C verwenden.

Das bedeutet, dass sich in den untersten Schichten des Fluides meist Körper befinden, in deren Hohlraum sich Phasenwechselmaterial in festem Zustand, also kristallisiert, befindet, während sich in den obersten Schichten Körper befinden, in deren Hohlraum sich das gleiche Phasenwechselmaterial, allerdings in flüssigem Zustand befindet.

Im mittleren Bereich befinden sich Schichten des Fluides, in denen Körper angeordnet sind, in denen Phasenwechselmaterial in der Nähe ihrer Schmelztemperatur oder bei Schmelztemperatur liegen, insbesondere also auch solche, die gerade einen Phasenwechsel in der einen oder anderen Richtung durchlaufen, wenn zuvor gerade eine mehr oder weniger geringfügige Temperaturänderung im Behälter stattgefunden hat.

Durch diesen Effekt einer eindeutig festlegbaren Temperatur in einer bestimmten Schicht des Fluides im Inneren des Speicherbehälters kann auch eindeutig vorhergesehen werden, welche Anordnungen von Phasenwechselmaterialien jetzt gerade von einer Temperaturänderung angesprochen werden.

Es ist nämlich derjenige Körper, der genau in derjenigen Schicht liegt, deren Fluid gerade die Temperatur besitzt, die im Inneren des Körpers die Schmelztemperatur der Mischung ist.

Dadurch, dass Fluid einer bestimmten Temperatur immer in eine Schicht von Fluid mit genau gleicher Temperatur eingespeist wird, entsteht keine Durchmischung in der Umgebung der Phasenwechselmaterialien, sondern lediglich eine sehr langsame Vergrößerung der entsprechenden Schicht durch die Zunahme von Fluid der gleichen Temperatur beim Einschichten und somit eine ebenso langsame Verdrängung von Schichten höherer Temperatur nach oben.

Ähnlich verhält es sich beim Abzapfen warmen Wassers oben für Heizungs- oder Warmwasserzwecke oder beim Entnehmen von kaltem Wasser vom Boden des Speicherbehälters etwa als Zuführleitung für eine solarthermische Anlage auf dem Dach. In diesen Fällen werden die entsprechenden Schichten langsam dem Speicherbehälter entnommen, so dass andere Schichten höherer Temperatur nach unten absteigen.

Dadurch, dass ganz eindeutig klar ist, welche Temperatur in einer bestimmten Schicht herrscht und in welche Richtung sich diese Temperatur gerade langsam ändert, ist ebenfalls eindeutig, ob ein in dieser Schicht oder an dieser Schicht befindliches Phasenwechselmaterial gerade auf dem Temperaturniveau liegt, bei dem eine Phasenänderung eintritt und mithin Wärmeenergie dem umgebenden Fluid für diesen Phasenwechsel entzogen oder durch diesen Phasenwechsel freigegeben und somit dem Fluid zugeführt wird.

Oberhalb und unterhalb dieser Schicht treten diese Effekte dann nach Verlassen eines Toleranzbereiches nicht mehr auf, da dort die feste oder flüssige Phase des Phasenwechselmaterials eindeutig besteht und die herrschende Temperatur einen Phasenwechsel nicht erforderlich macht.

Dadurch, dass in den anderen Schichten nun keine Wärmeenergie zu- oder abgeführt wird, bleibt die Schichtung der Fluide mit jeweils einer bestimmten Temperatur exakt erhalten und es kommt auch durch den Einsatz der Phasenwechselmaterialien keine Turbulenz in das Fluid in dem Speicherbehälter.

Die Wärmeenergie wird also unter optimalen Einsatz der sogenannten Exergie eingespeist. Ein unter Einsatz von Solarenergie eingesetzter Warmwasserspeicher nach Schichtentechnologie steht unter anderem mit einem oder mehreren Solarkollektoren in Verbindung. Diese liefern beispielsweise gegen Abend nur noch mäßig Wärme und es stehen keine sehr hohen Temperaturen zur Verfügung. Die aus diesen Solarkollektoren gegen Abend abgelieferte Fluidmenge wird auf der Höhe im Schichtenspeicher eingeschoben, in der bereits Fluid genau dieser Temperatur vorliegt. Entsprechend wird kaltes Wasser nach unten verdrängt und die kältesten Fluidbestandteile aus dem Speicher dem Solarkollektor zur weiteren Erwärmung zugeführt. Bei einer Betrachtung der Exergie nutzen derartige Behälter mit in Schichten gespeicherten Fluiden den Vorteil, dass sie die im Fluid bestehende Entropie nicht erhöhen und keine zusätzliche erzeugen. Derartige Warmwasserspeicher sind also hinsichtlich der Entropie optimiert. Herkömmliche Konzepte unter Verwendung von Phasenwechselmaterial beziehungsweise Latentwärmespeichern nehmen darauf jedoch keine Rücksicht stören die Fluide innerhalb der Behälter durch Zirkulation. Dadurch erhöhen sie die Entropie und haben einen nachteiligen Einfluss auf die an sich vorteilhafte Wirkung der in Schichten gespeicherten Fluide.

Erfindungsgemäß wird dagegen eine andere Form von "Zirkulation" innerhalb der Speicherbehälter möglich. Es handelt sich bei dieser "Zirkulation" eben gerade nicht um das unnötige Verrühren von Fluiden, sondern um das sinnvolle und geplante sowie zielgerichtete Verdrängen von kalten Fluiden durch optimiertes Einführen von warmen oder zumindest angewärmten Fluid in der geeigneten Höhe beziehungsweise Schicht innerhalb des Speicherbehälters.

Besonders bevorzugt ist es, auch die genaue Lage für die Körper mit den Phasenwechselmaterialien innerhalb des Behälters zu optimieren. In einer bevorzugten Ausführungsform wird als besonders günstige und effektive Einbausituation das waagerechte Legen von Körpern in Beutelform mit Zwischenabständen von ungefähr 0,5 cm bis 5 cm ausgewählt.

Alternativ ist es auch möglich, die Körper insbesondere mit einer Stützkonstruktion senkrecht in den Speicher hineinzustellen. Diese alternative Konzeption hat den Vorteil, ein leichteres Einbringen in den Behälter zu ermöglichen. Bei der Fertigung hätte es den Vorteil, dass für mehrere oder alle Beutelstränge die gleiche Länge gewählt werden könnte.

Bei beiden Alternativen sollte innerhalb des gesamten Wärmespeichers der Anteil an Körpern mit Phasenwechselmaterial zwischen 20 % und 80 % liegen, vorzugsweise zwischen 40 % und 70 %. Wird die Konzentration noch über diese Anteile erhöht, liegen oder stehen mithin die Beutel noch näher beieinander, so wird der Austausch von Fluiden in der Umgebung der Beutel, also des Wassers oder der Sole, relativ stark gehemmt und auf diese Weise entsteht unter Umständen doch eine Störung der Schichtwirkung.

Werden die Beutel dagegen in deutlich größeren Zwischenabständen gelegt und liegt mithin der Anteil an Phasenwechselmaterial innerhalb des Behälters niedriger als 20 %, so tritt zwar keine Beeinträchtigung der Funktionen des Schichtenspeichers im Übrigen ein, die Möglichkeiten der Phasenwechselmaterialien werden dann aber nicht vollständig genutzt und der Aufwand für das Vorsehen der zusätzlichen Körper wird ökonomisch betrachtet unter Umständen zu hoch.

Von besonders großem Vorteil ist es, dass Wärmespeicheranlagen ohne großen Installationsaufwand auch nachträglich mit Latentwärmeelementen ausgerüstet werden können, also mit Phasenwechselmaterial und den sich daraus ergebenden Vorteilen ausgestattet werden können, auch wenn dies ursprünglich nicht vorgesehen war.

Wird von der oben beschriebenen Möglichkeit Gebrauch gemacht, die Körper in Beutelform oder kissenähnlich auszugestalten, ergibt sich für die nachträgliche Ausgestaltung von Behältern für Wärmespeicher beziehungsweise Warmwasserspeicher mit insbesondere Schichtenaufbau die Möglichkeit, Verbund-Stapelsysteme vorab zu konfigurieren und diese dann mit wenigen Handgriffen in bereits vorhandene Speichersysteme einzufügen. Natürlich besteht auch die Möglichkeit, die Beutel oder Kissen einzeln anzuliefern. Durch eine nachträgliche Ausrüstung kann nach den ersten Tests die gesamte Wärmekapazität eines solchen Speichersystems um etwa 50 % bis 150 % angehoben werden, ohne dass die äußeren Abmessungen des Speicherbehälters sich verändern oder andere wesentliche Eingriffe in das Warmwassersystem beziehungsweise Heizungssystem getätigt werden müssten.

Sieht man als Einsatzzweck eines Gerätes die Warmwasserzwischenspeicherung aus Solaranlagen für den häuslichen Bereich, so könnte als angestrebter Lastfall das Einschalten von zwei Duschen parallel in einem Haus betrachtet werden. Dabei werden Wärmemengen im Bereich von 5 kW bis 100 kW, vorzugsweise von 15 kW bis 70 kW, weiter bevorzugt 40 kW bis 60 kW entnommen. Speichergrößen, die für diese Häuser eingesetzt werden, belaufen sich zwischen 100 Litern und 10 Kubikmetern, vorzugsweise 300 Liter bis 1 Kubikmeter. Anhand von Tests und Überlegungen hat sich herausgestellt, dass eine optimale Dicke von Beuteln zur Bereitstellung der Wärme zwischen 1 und 3 cm liegt.

Interessanterweise ergibt sich, dass die exakte Mischung des Eutektikums mit einem Schmelzpunkt von Magnesiumchlorid und Magnesiumnitrat von ca. 56 °C sich auch in dieser Beziehung als sehr günstig erweist.

Aufgrund der Anforderungen in einem üblichen bereits installierten Warmwasserkonzept in Ein- und Mehrfamilienhäusern ergeben sich unter bestimmten Randbedingungen auch Ziele, die auf eine etwas höhere Schmelztemperatur sich fokussieren.

Es bestätigt sich, dass ein Verschieben des Mischungsverhältnisses zu einer beeinflussbaren Schmelztemperatur führt.

Es ergibt sich eine stabile Mischung, bei der sich ein Schmelzpunkt zwischen 50 °C und 70 °C einstellen lässt.

Die Problematik bei beliebigen Mischungen von Salzen stellt sich sonst so dar, dass bei mehrmaligem Aufschmelzen und Erstarren der Salzlösungen in ungerührtem Zustand sich Schichten ausbilden, bei denen die schwere Salzlösung und das schwere Salz sich unten absetzen, das leichtere Salz sich jedoch oben absetzt. Diese Problematik führt dazu, dass zwei getrennte Salzlösungen vorliegen und die kombinatorischen Eigenschaften der beiden Salze abhandenkommen. Damit ergeben sich in der Regel ungünstige Schmelzpunkte, beziehungsweise Erstarrungspunkte, die weit außerhalb des Zielkorridors liegen. Diese literaturbekannte Problematik konnte durch Verwenden eines Eutektikums, beziehungsweise von Salzlösungen in der Konzentrationsumgebung von Eutektika erfolgreich vermieden werden. Im Rahmen der Versuche zur erfindungsgemäßen Apparatur wurden über 1000 Zyklen des Aufschmelz- und Erstarrungsvorgangs durchgeführt, ohne das gefürchtete Mischungsverhalten zu erkennen.

Eine besonders bevorzugte Ausführungsform der Erfindung besitzt ein Housing System für die Werkstoffe aus den Phasenwechselmaterialien. Dabei wird es bevorzugt, wenn die Körper eine elastische Hülle aufweisen, deren Elastizität so bemessen ist, dass sie den Volumenänderungen des Phasenwechselmaterials folgen kann.

Das erfindungsgemäße Housing System bietet verschiedene Vorteile. Ein Vorteil besteht darin, dass die in einer wärmetechnischen Anlage verbauten metallischen Gegenstände, Rohre, Platten, Schweißnähte, Flansche, Stutzen und Ähnliches vor dem aggressiven Verhalten der eingesetzten Salze geschützt werden. Hierbei werden in erfindungsgemäßer Weise vorteilhaft Salze in Kunststoffbeuteln, Gummibeuteln oder ähnlichen Materialien eingebracht und zum Beispiel verschweißt oder in anderer Weise hermetisch von dem umgebenden Wasser abgeriegelt.

Die Form der Beutel kann den Anforderungen angepasst werden. Die eingesetzten Salze haben im festen Aggregatzustand üblicherweise einen ungünstig hohen Wärmewiderstand. Dies führt dazu, dass beim Eindringen der Wärme in den Körper mit dem Phasenwechselmaterialien, die von außen einströmende Wärme nicht oder nur schlecht innerhalb des Feststoffes verteilt werden kann. Vor allem im Entzug der Wärmefeststoffspeicher zeigt sich ein ähnlich ungünstiges Verhalten, welches dazu führt, dass sich Verkrustungen an den sich kühler darstellenden Außenflächen ergeben können, die einen Wärmewiderstand hervorrufen. Dieser Wärmewiderstand behindert das schnelle Abfließen von Wärme und damit die Wärme-Abgabe an den Speicher.

Diese Probleme werden im Rahmen einer Ausführungsform der Erfindung durch eine bevorzugte Gestaltung der Housing-Geometrie gelöst. Es konnte gezeigt werden, dass für unterschiedliche Anwendungsfälle ein ideales Fenster für Schichtdicken existiert. Dieses Fenster bedeutet in diesem Falle ein optimale Schichtdicke für eine bestimmte Entnahmegeschwindigkeit und damit den Einsatzzweck des Gerätes.

Es ist besonders bevorzugt, wenn die Körper, in deren Hohlraum sich die Mischung des Phasenwechselmaterials befindet, mit einem Mehrschichtsystem ummantelt sind, welches innen eine metallische Trennschicht aufweist und außen beidseitig mit Kunststoff ummantelt ist.

Derartige Körper ergeben insbesondere fusionsdichte und zugleich langzeitstabile Housing-Systeme. Dabei ist zu berücksichtigen, dass gerade bei einem Einsatz in Behältern der Heizungstechnik die Körper besonderen Anforderungen ausgesetzt sind. So ist einerseits zu berücksichtigen, dass die Körper chemisch sowohl den Phasenwechselmaterialien im Inneren als auch dem außen angrenzenden Fluid gegenüber stabil sein müssen. Als Fluid werden in Behältern der Heizungstechnik für Wärmespeicher häufig Sole-Gemische eingesetzt, die weitgehend aus Wasser bestehen, jedoch auch Zusatzstoffe wie etwa Ethylenglykol oder Propylenglykol oder andere in Solaranlagen übliche Additive enthalten.

Im Inneren der Körper befindet sich erfindungsgemäß das Phasenwechselmaterial, das wie erwähnt in verschiedenen Aggregatzuständen vorliegen kann, beispielsweise auch als Salzlösung. Schließlich ist zu berücksichtigen, dass die Ummantelung bevorzugt diffusionsdicht sein sollte, um zum Einen eine Diffusion des Phasenwechselmaterials aus dem Hohlraum im Inneren der Körper in das umgebende Fluid und zum Anderen auch eine Diffusion der Zusatzstoffe und auch des Wassers aus dem Behälter in das Innere des Körpers zu vermeiden. Wärme sollte jedoch geleitet werden können, damit das Phasenwechselmaterial seiner Funktion nachkommen kann, und schließlich sollten die Kosten für die Ummantelung der Körper nicht zu hoch liegen, um den angestrebten Effekt der ökonomischen Einsatzbarkeit nicht zuwider zu laufen.

Von daher sind erfindungsgemäß hochpreisige Edelstähle als Wandung für die Körper weniger geeignet, während andererseits kostengünstige Bleche ebenfalls ausscheiden, da sie nicht chemisch resistent genug sind. Aus ähnlichen Gründen sind auch Kupfer, Aluminium und andere Metalle weniger geeignet. Auch Kunststoffe zeigen ein Problem, da selbst dickwandige Kunststoffrohre dazu neigen, nicht diffusionsdicht zu sein. Es bildet sich dann ein Gradient einer Salzlösungskonzentration vom Hohlraum im Inneren der Körper durch die Ummantelung in den Behälterraum mit dem Fluid. Versuche zeigen, dass bei Körpern mit einer Ummantelung aus Kunststoff es zu einer Ionenwanderung von dem Außenraum mit der geringeren Salzkonzentration zu dem Innenraum der Körper mit hoher Salzkonzentration kommen kann. Dadurch tritt im Laufe der Zeit eine Verdünnung der dort enthaltenen Salzlösung ein, so dass es nach einer Reihe von Erstarrungs- und Auflösungszyklen zu einer Senkung der Schmelztemperatur der Mischung des Phasenwechselmaterials kommen kann.

Durch die bevorzugte Ausführungsform einer erfindungsgemäßen Gestaltung des Körpers mit einer Ummantelung, die innen eine metallische Trennschicht aufweist, welche auf beiden Seiten von Kunststoff umgeben ist, ergibt sich jedoch eine ausgezeichnete Lösung des Problems. Die metallische Trennschicht im Inneren verhindert jede Diffusion aus dem Innenraum nach außen oder umgekehrt und die beiden Kunststoffschichten schützen die metallische Trennschicht im Inneren gegen chemische Angriffe sowohl von innen als auch von außen. Dabei kann eine vergleichsweise kostengünstige metallische Trennschicht verwendet werden, da sie geschützt ist und kein Edelstahl benötigt wird.

Diese erwähnte Konzeption aus Compound-Material lässt sich darüber hinaus aufgrund der Kunststoff-Außenbeschichtung gut mittels thermischer Anlagen verschweißen, so dass auf diese Weise eine rationelle Herstellung entsprechender Körper in Form von Beuteln, Schläuchen oder anderer Geometrien machbar wird. Schließlich zeigen Tests, dass auch über eine relativ lange Dauer von tausend Lade- und Entladezyklen eine absolute Diffusionsdichtheit gewährleistet werden kann.

Es zeigt sich dabei, dass die Erstarrungstemperatur der Mischung des Phasenwechselmaterials im Bereich des Eutektikums über die gesamte Versuchsdauer konstant bleibt.

Bevorzugt wird eine Ummantelung der Körper gewählt, bei der auch eine Trennung der Kunststoffbeschichtungen von der metallischen Trennschicht im Inneren vermieden wird, damit nicht durch Beschädigungen doch Salzlösung an diese metallische Trennschicht gelangen kann.

Alternativ zu den beschriebenen Körpern in Beutel- oder Kissenform ist eine Einbringung in den Behälter mit dem Fluid auch in anderen separaten, kleinen Einheiten möglich. Rein grundsätzlich wäre sogar eine Einbringung in die bekannten PET-Flaschen aus der Getränkeindustrie möglich oder auch andere kugel-, zylinder-, oder flaschenförmige Elemente. Diese können nicht nur fest, sondern alternativ auch als lose Schüttung im Wärmespeicher angeordnet werden und werden dann außen von dem Fluid umströmt. Jedenfalls wird auch dabei sichergestellt, dass die Konstruktionselemente des Wärmespeichers keine Berührung mit den Phasenwechselmaterialien bekommen und somit keine Korrosionsproblematik entsteht.

Die Größe der Körper bei allen erwähnten Ausführungsformen wird sinnvoll so gewählt, dass die verfügbaren Nennweiten der Öffnungen in bestehenden Wärmetauschern berücksichtigt werden, damit die Körper nicht in diese Wärmetauscher hineingelangen, sofern es sich um lose Körper handelt. Auch die gewünschten Wärmeübertragungsleistungen und die dafür angemessene Oberfläche sowie die Lastkurven für Beladung und Entladung sind zu berücksichtigen.

Insbesondere bei einem Einsatz der Körper als lose Ware nachträglich in vorhandene Wärmespeicher und Behälter kann das Einbringen nach Entfernung eines üblicherweise vorgesehenen Flansches im Behälter und/oder über vorhandene Rohrleitungen erfolgen.

Gerade bei einer Anwendung in sogenannten Schichtenspeichern ergibt sich, dass die in einer bestimmten Schicht üblicherweise eingenommene Temperatur relativ gut vorhersagbar ist und zwar Schwankungen unterliegt, diese Schwankungen jedoch in jeder Schicht für sich betrachtet innerhalb eines bestimmten Temperaturspektrums erfolgen.

Dies ermöglicht eine weitere Ausführungsform der Erfindung, die sich dadurch auszeichnet, dass das Phasenwechselmaterial in unterschiedlichen Niveauebenen des Behälters jeweils anders zusammengesetzt und/oder aus anderen Stoffen aufgebaut ist.

Dies bedeutet, dass der Wärmespeicher mit unterschiedlichen Phasenwechselmaterialien in unterschiedlichen Zonen ausgestattet wird. Dabei kann beispielsweise vorgesehen werden, dass in dem unteren Bereich eines Wärmespeichers, insbesondere im unteren Drittel, in dem häufig das für die Heizung zu verwendende Fluid mit Temperaturen von 30 °C bis 50 °C sich befindet, auch ein Phasenwechselmaterial mit einer Mischung und Anordnung verwendet wird, das gerade in diesem Temperaturbereich seinen Schmelzpunkt beziehungsweise Kristallisationspunkt besitzt. In dem oberen Teil des Wärmespeichers, insbesondere im oberen Drittel, das etwa für eine Warmwasseranwendung gedacht ist und einen Temperaturbereich von 50 °C bis 110 °C, insbesondere von 60 °C bis 95 °C, aufweist, wird dann ein Phasenwechselmaterial mit einem Schmelzpunkt in diesem Bereich eingesetzt.

In ähnlicher Form können auch andere Temperaturbereiche etwa bei Pelletkesseln oder bei einer solaren Kühlung mit Phasenwechselmaterialien unterschiedlicher Schmelzpunkte eingesetzt werden.

Für eine entsprechende Mischung eines Phasenwechselmaterials in diesem oberen Bereich eignen sich insbesondere die Salze Magnesiumchlorid oder Magnesiumnitrat beziehungsweise deren Mischungen am Punkt des Eutektikums dieser beteiligten Stoffe. Die Verbesserung der Wärmespeicher beziehungsweise die Erhöhung der Wirksamkeit der Verwendung verschiedener Phasenwechselmaterialien in verschiedenen Höhen des Wärmespeichers lässt sich dadurch ausdrücken, dass ein Teil der gespeicherten Wärmeenergie auf einem höheren Temperaturniveau gespeichert ist. Dieses führt zu einer erhöhten Exergie im Wärmespeicher führt.

Eine weitere oder auch eine alternative Verbesserung des Wärmespeichers kann entstehen, indem ein drittes oder jedenfalls ein anderes Phasenwechselmaterial im unteren Bereich des Wärmespeichers eingesetzt wird. Dies ist insbesondere bei einem Einsatz im Solarbetrieb von Vorteil, also bei einem ungleichmäßigen Energieeinfall zur Einspeicherung. Auch im Fall eines Betriebes mit einer Wärmepumpe kann sogenannte Niedertemperaturwärme oder auch Kälte noch mit einer vergleichsweise hohen Energiedichte eingespeichert werden.

Bei weiteren Ausführungsformen ist auch noch zu berücksichtigen, dass eine Verwendung von Phasenwechselmaterialien mit einem Unterkühlungseffekt stattfinden kann. Dadurch kann bei einer verlustarmen Langzeitspeicherung über eine mechanische Aktivierung eine Wärmefreisetzung aktiviert werden.

Bei einem Einsatz von mehreren unterschiedlichen Phasenwechselmaterialien in verschiedenen Schichten hätte die oben diskutierte waagerechte Anordnung von Körpern einen fertigungstechnischen Vorteil. Die einzelnen Körper in einer Temperaturschicht entsprechend der Schichtung im Speicher wären jeweils identisch und könnten so gemeinsam gefertigt werden. Allerdings wären dann bei einem runden Behälterquerschnitt innerhalb der Schicht verschiedene Längen zu fertigen.

In einer weiteren bevorzugten Ausführungsform der Erfindung wird vorgesehen, dass als Phasenwechselmaterial oder jedenfalls als eines von mehreren Phasenwechselmaterialien eine unterkühlte Schmelze eingesetzt wird, die ihren Aggregatzustand durch mechanische schnelle Bewegung oder Kavitation oder elektrische Pulsanregung aus einer flüssigen in eine feste Form ändert. Es handelt sich hier um ein sogenanntes "Latentmaterial", das zu einer starken Unterkühlung neigt. Das bedeutet, dass diesem Material in seiner flüssigen Form Wärme entzogen wird, sodass die flüssige Form sich unter den Schmelzpunkt abkühlt, gleichwohl aber nicht kristallisiert, also entgegen dem tatsächlichen Temperaturzustand eine flüssige Form und keine feste Form annimmt.

Dieser bei bestimmten Zusammensetzungen gefundene Effekt wird herkömmlich bei vielen Anwendungsfällen als sehr störend empfunden. Gerade im vorliegenden Fall im Zusammenhang mit Wärmespeichern kann er jedoch überraschend für eine sehr nützliche Verbesserung des Wärmespeichers eingesetzt werden. Ein mögliches, hier verwendbares Phasenwechselmaterial wäre Natriumacetat.

Da die unterkühlte Schmelze im flüssigen Zustand eine relativ niedrige Temperatur besitzt, gibt sie auch wenig Wärme als Verlust an die Umgebung ab. Das führt dazu, dass bei einer gleichbleibenden Außenisolierung eine längere Speicherung möglich ist.

Dieses Material kann aktiviert werden, etwa über einen Spannungspuls oder eine mechanische Entladung einer vorgespannten Feder oder auch über einen anderen Anregungsmechanismus. In dem Moment, wo diese Aktivierung startet, beginnt die Phasenumwandlung und die in dem Material vorhandene latente Wärme führt zu einer Temperaturanhebung, die in einigen Anwendungsfällen durchaus 30 °C betragen kann. Diese so freiwerdende Wärme kann zu einem gewünschten und gezielt durch diese Aktivierung ansteuerbaren Zeitpunkt an den Verbraucher abgegeben werden. Diese Abgabe kann auch gezielt in Segmenten verschiedener aktivierter Wärmekisten oder Körper erfolgen und eine geregelte Energieabgabe ermöglichen.

Eine andere Ausführungsform der Erfindung setzt eine bisher noch in keiner Form angedachte Anordnung von Phasenwechselmaterialien in die Praxis um.

Auch hier wird mit Phasenwechselmaterialien mit einer nahe dem Eutektikum liegenden Mischung gearbeitet.

Bevorzugt ist dabei eine Mischung aus Magnesiumchlorid und Magnesiumsulfat.

Die Anordnung erfolgt hier derart, dass anstelle der Außenisolierung von Speicherbehältern (beziehungsweise innerhalb dieser Außenisolierung jedoch außerhalb des Speicherbehälters) eine Schicht aus dem Phasenwechselmaterial aufgebracht wird. Bei neuen Speicherbehältern ist dies problemlos vorsehbar, bei bereits vorhandenen Speicherbehältern wird man die vorhandene Außenisolierung abnehmen, die häufig ohnehin abnehmbar angebracht ist. Nach dem Aufbringen der Schicht aus dem Phasenwechselmaterial wird vorzugsweise eine neue Lage Isolationsmaterial außerhalb dieser Schicht aufgetragen.

Eine optimale Dicke der Schicht aus Phasenwechselmaterial ergibt sich dabei aus der üblichen Entnahmegeschwindigkeit von Wärme und der Beladegeschwindigkeit des mit dem Speicherbehälter vorhandenen Wärmeangebots beziehungsweise den Wärmeentzugs.

Auch bei dieser Ausführungsform der Erfindung ist die Wahl der Mischung für das Phasenwechselmaterial die gleiche wie bei der ersten Ausführungsform mit den im Fluid angeordneten Körpern. Es ergeben sich die gleichen Vorteile durch die Wahl einer Mischung mit einem Mischungsverhältnis der einzelnen Bestandteile, die am oder im Bereich des Eutektikums der gemischten Bestandteile liegt. Es entstehen auch hier wiederum die Vorteile, dass eine im Bereich des Eutektikums liegende Mischung sich nicht entmischt und aus reichlich zur Verfügung stehenden und vergleichsweise kostengünstigen Salzen aufgebaut werden kann.

Der Speicherbehälter stellt die zur Verfügung zu stellende Leistung in Form von Wärme bereit. Dies arbeitet also - wenn nicht zusätzlich Phasenwechselmaterialien etwa im Sinne der oben erörterten Ausführungsform der Erfindung im Inneren des Speicherbehälters vorgesehen sind - wie ein herkömmlicher Speicherbehälter, der mit einem geeigneten Fluid gefüllt ist.

Die äußere Beschichtung des Speicherbehälters liefert nunmehr in geringerer Geschwindigkeit die aus dem Speicherbehälter verbrauchte Wärme nach innen nach. Es erfolgt also eine Abgabe von Wärme aus dem Phasenwechselmaterial in Richtung nach innen in den Speicherbehälter, wenn dort Wärme verbraucht wird. Ebenso wird überschüssige Wärme aus dem Inneren des Speicherbehälters in die äußere Schicht mit dem Phasenwechselmaterial gegeben, wenn sie zur Verfügung steht. Die Beschichtung aus dem Phasenwechselmaterial bildet damit zugleich auch eine Art aktive Isolierung.

Eine in Versuchen bestätigte anzustrebende Dicke der Beschichtung liegt oberhalb der optimalen Dicke der Körper in dem Speicherinnenraum aus den vorherigen Beispielen. Es zeigt sich, dass die Beschichtung aus dem Phasenwechselmaterial etwa 5 cm bis 30 cm dick sein sollte.

Besonders günstig ist es, wenn diese Beschichtung an den senkrechten Seitenwänden vorgesehen wird. Hier zeigt sich der Effekt, dass in dem flüssigen Anteil der Masse der Phasenwechselmaterialien, zum Beispiel beim Aufheizen über ein Thermosiphonwirkung, sich eine gute Durchmischung der Wärme ergibt, die sich bis an die Oberfläche der Feststoffe überträgt.

Bei einer Wärmeabgabe in das Speicherinnere bilden sich Verkrustungen an der inneren Wand. Diese Verkrustungen werden allerdings von der äußeren flüssigen Phase der Phasenwechselmaterialien tendenziell in den unteren Teil der außen aufgebrachten Beschichtung gespült, die gewissermaßen eine Speichererweiterung darstellt.

Damit ergeben sich gute Wärmeübergänge gerade im oberen Teil der äußeren Beschichtung aus Phasenwechselmaterial.

Auch in diesem Falle können bereits existierende Speicherbeheälter in vorhandenen Heizungsanlagen vorteilhaft nachgerüstet werden.

Auch bei dieser Alternative mit einer äußeren Beschichtung des Speicherbehälters mit den Anordnungen aus Phasenwechselmaterial kann mit Vorteil der Gedanke eingesetzt werden, dass das Phasenwechselmaterial in unterschiedlichen Niveauebenen des Behälters jeweils anders zusammengesetzt und/oder aus anderen Stoffen aufgebaut ist.

Auch hier würde man im oberen Bereich, insbesondere im oberen Drittel, des Wärmespeichers Körper mit einem Phasenwechselmaterial einsetzen, welches aus Mischungen besteht, die einen Schmelzpunkt im Bereich zwischen 50 °C und 110 °C, vorzugsweise von zwischen 60 °C und 95 °C aufweisen.

In einer weiter bevorzugten Alternative würde man im unteren Bereich, insbesondere im unteren Drittel, des Wärmespeichers Körper mit einem Phasenwechselmaterial einsetzen, welches aus Mischungen besteht, die einen Schmelzpunkt im Bereich zwischen 5 °C und 50 °C, vorzugsweise zwischen 30 °C und 50 °C aufweisen.

Werden die entsprechenden Phasenwechselmaterialien hier außerhalb des Speicherbehälters eingesetzt, treten ebenfalls die oben in anderem Zusammenhang beschriebenen Vorteile ein. Wenn es sich um einen sogenannten Schichtenspeicher handelt, kann auch für diesen Bereich unmittelbar außerhalb des Behälters auf dessen Wandung die üblicherweise eingenommene Temperatur in einer bestimmten Niveauhöhe recht gut vorhergesagt werden. Sie unterliegt auch in diesem Bereich Schwankungen, die jedoch in einem sehr gut vorhersagbaren Temperaturspektrum erfolgen und damit in jedem unterschiedlichen Niveau den Einsatz von Phasenwechselmaterial mit einem jeweils anderen Schmelzpunkt möglich machen und dadurch eine Abstimmung auf einen besonders effektiven Einsatz ermöglichen.

Speicherbehälter sind aus konstruktiven und statischen Gründen im Regelfall in einer Zylinderbauform aufgebaut, von der nur selten abgewichen wird. Diese zylinderförmigen Speicherbehälter besitzen üblicherweise Durchmesser, die 80 cm oder maximal 1 m selten übersteigen. Die Beschichtung mit den Phasenwechselmaterialien kann vorteilhaft in Form von Halbschalen angeliefert werden, welche ein Gestell und Folienschläuche aufweisen. Dadurch wird der Durchmesser des Speicherbehälters nachträglich erweitert, allerdings auch seine Wärmekapazität.

Die Speicherbehälter können auch in einer anderen Bauform vorliegen, beispielsweise als kubischer Behälter. In dem Fall würde die Beschichtung mit dem Phasenwechselmaterial in einer an diese Bauform angepassten Form vorgenommen.

Die drucklosen Folienschläuche können entweder werkseitig befüllt und als Erstausstattersystem transportiert werden, oder es kann alternativ ein leerer Beutel mit einem entsprechenden Halterungssystem in das betreffende Haus, an die Baustelle oder den Anwendungsort transportiert werden. Dort kann es dann aus einem Tanksystem mit einer vorgewärmten Flüssigkeit aus Phasenwechselmaterialien gefüllt werden.

In ähnlicher Weise wird dann anschließend nachträglich die äußere Beschichtung beziehungsweise die Außenisolierung aufgebracht.

Auf diese Weise kann aus einem Kessel oder Tank mit 80 cm Durchmesser ein System mit 1,40 m oder 1,80 m Durchmesser mit den entsprechenden Schichten aus Phasenwechselmaterialien und der äußeren Isolation aufgebaut werden.

Es leuchtet ein, dass mit einem solchen Gesamtsystem ein außerordentlich hoher Wärmeinhalt gespeichert werden kann, der den des ursprünglichen Systems weit übertrifft.

Darüber hinaus ist dieser Bereich auch drucklos zu betreiben. Besondere Kosten für Druckabnahme oder Sicherheitsvorrichtungen sind mithin für diese zusätzliche Beschichtung mit Phasenwechselmaterialien nicht erforderlich. Diese beschränken sich auf die ohnehin erforderlichen Überprüfungen des inneren Bereiches des Speicherbehälters.

Das bedeutet, dass die Gesamtkosten des Systems trotz des zusätzlichen Kostenaufwandes für die Phasenwechselmaterialien pro Liter des Wärmespeicherinhalts konstant bleiben oder sogar gesenkt werden können.

Weitere bevorzugte Merkmale und Vorteile der Erfindung ergeben sich aus den Unteransprüchen, den Figuren der Zeichnung und der im Folgenden gegebenen Figurenbeschreibung.

Im Folgenden werden anhand der Zeichnung zwei Ausführungsbeispiele der Erfindung näher erläutert. Es zeigen:
- **Figur 1**: ne schematische Schnittdarstellung durch einen Wärmespeicher gemäß einer ersten Ausführungsform der Erfindung;
- **Figur 2**: einen schematischen Schnitt durch einen Wärmespeicher gemäß einer zweiten Ausführungsform der Erfindung;
- **Figur3**: eine schematische perspektivische Ansicht auf eine scheibenförmige Konfiguration, die als horizontale Scheibe aus einer dritten Ausführungsform der Erfindung geschnitten ist;
- **Figur 4**: eine perspektivische vergrößerte Darstellung eines Teilbereiches aus einer modifizierten Form der dritten Ausführungsform aus Figur 3;
- **Figur 4a**: eine Seitenansicht des Teilbereiches aus Figur 4;
- **Figur 4b**: eine Seitenansicht von einer anderen Seite des Teilbereiches aus Figur 4;
- **Figur 4c**: eine Draufsicht auf den Teilbereich aus Figur 4;
- **Figur 5**: eine schematische Darstellung von mehreren Elementen aus Figur 4, gesehen ähnlich wie in Figur 4c;
- **Figur 5a**: eine vergrößerte, schematische Darstellung eines Teilbereiches aus Figur 5;
- **Figur 6**: eine Seitenansicht eines Wärmespeichers gemäß einer vierten Ausführungsform der Erfindung; und
- **Figur 6a**: einen Schnitt durch Figur 6.

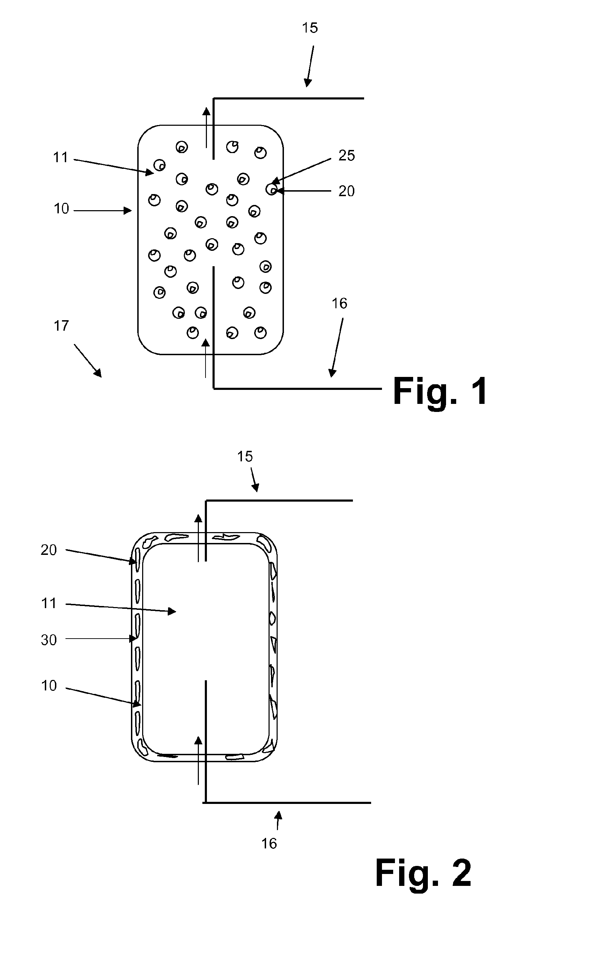

Ein in der **Figur 1** dargestellter Wärmespeicher weist insbesondere einen Behälter 10 auf. In dem Behälter 10 befindet sich ein Fluid 11.

Das Fluid 11 besteht im Wesentlichen aus Wasser, zusätzlich enthält es Additive, um den Gefrierpunkt weit herab zu setzen und ein Gefrieren des Fluides in bestimmten Situationen zu vermeiden. Auch Zusätze für einen Korrosionsschutz oder für andere angestrebte Verhaltensweisen des Fluides 11 sind denkbar.

Der Behälter 10 ist Teil beispielsweise einer Heizungs- und Warmwasserbereitungsanlage. Der Behälter 10 ist üblicherweise zylinderförmig und 1 m bis 2 m hoch, aber auch andere Abmessungen sind denkbar.

In dem Behälter 10 können (nicht dargestellt) Einbauten vorhanden sein, beispielsweise ein zusätzlicher Brenner, mit dem das Fluid in einem bestimmten, meist oberen Bereich des Behälters 10 auf höhere Temperaturen gebracht wird.

Das Fluid 11 in dem Behälter 10 ist (nicht dargestellt) in Schichten gespeichert. Das bedeutet, dass die Temperatur des Fluides 11 nicht im gesamten Behälter gleich ist, sondern das eine weitgehend kontinuierliche Steigerung der Temperatur von den kältesten Schichten am Boden des Behälters 10 bis zu den wärmsten Schichten ganz oben im Behälter 10 vorliegt. Turbulenzen werden weit möglichst vermieden.

Sofern nun warmes Wasser oder Wärme benötigt wird, so wird heißes Fluid aus dem obersten Bereich des Behälters abgezogen, was durch eine Abführleitung 15 angedeutet ist. Diese Abführleitung 15 entnimmt heißes Fluid und führt es der weiteren Verwendung zu. Die weitere Verwendung kann ein Wärmetauscher sein, in dem die Wärme des Fluides an Trinkwasser übergeben wird, welches dann vom Nutzer abgezapft werden kann.

Die Abführleitung 15 kann ebenso zu Heizkörpern geführt werden und dort für die Erwärmung eines Gebäudes sorgen. Diese Darstellung ist hier rein schematisch gewählt; es ist auch möglich, mehrere separate Abführleitungen 15 zu verwenden.

Nachdem beispielsweise das Fluid 11, welches über die Abführleitung 15 entzogen worden ist, seine Wärme in einem Heizkörper an ein Gebäude abgegeben hat, wird es über eine Rückführleitung 16 im abgekühlten Zustand wieder in den Behälter 10 zurückgeführt. Das Gleiche ist auch der Fall, wenn das Fluid in einem Wärmetauscher seine Wärmeenergie an Trinkwasser abgegeben hat.

Nach dem Rückführen in der Rückführleitung 16 wird das nunmehr deutlich abgekühlte Fluid 11 in einer Höhe in den Behälter 10 wieder zurückgegeben, die Fluid bei genau der Temperatur aufweist, die das zurückzuspeichernde Fluid ebenfalls aufweist. Entsprechende Schichtenlader mit Ventilen, die dies bewirken können, sind in den in der Beschreibungseinleitung erörterten Druckschriften beschrieben.

Durch das Einspeichern in dem Niveau beziehungsweise in der Schicht, die Fluid 11 der exakt gleichen Temperatur aufweist, kann eine Turbulenz und Störung des Schichtensystems vollständig vermieden werden.

Neben der Rückführleitung 16 ist eine weitere Zufuhrleitung 17 schematisch angedeutet. Mit dieser Zufuhrleitung 17 wird beispielsweise Fluid 11 aus einem Solarkollektor auf dem Dach des gleichen Gebäudes in den Behälter zugeführt. Dieses Fluid 11 ist im Solarkollektor auf dem Dach des Gebäudes erwärmt worden und wird nun ebenfalls durch einen anderen Schichtenlader in einem Niveau beziehungsweise in eine Schicht der Fluide 11 in dem Behälter 10 eingeschichtet, die genau der Temperatur dieses über die Zufuhrleitung 17 zugeführten Fluides entspricht.

Dies ist keineswegs die gleiche Schicht, in der das abgekühlte Wasser aus dem Rücklauf 16 eingeschichtet wird.

Beide einzuschichtenden Fluide aus den Leitungen 16 und 17 können auch je nach aktuell zur Verfügung stehender Temperatur in zeitlich sich ändernden Schichten eingespeichert werden, wenn beispielweise aus dem Solarkollektor abends kühleres Fluid 11 zur Verfügung gestellt wird, als mittags.

Dem Solarkollektor wird (nicht dargestellt) dann natürlich als Ersatz für das von ihm gelieferte angewärmte Fluid 11 anderes Fluid 11 aus dem kältesten, ganz unten liegenden Bereich des Behälters 10 zugeführt.

Die Menge an Fluid 11 im Behälter 10 bleibt also ungefähr konstant. Die zusätzlich einzuschichtenden Fluide aus den beiden Leitungen 16 und 17 verdrängen also kältere Mengen an Fluid nach unten und wärmere Mengen an Fluid nach oben, wobei keine Turbulenzen entstehen.

Als zusätzliche Elemente sind nun Phasenwechselmaterialien 20 vorgesehen. Diese befinden sich in der dargestellten Ausführungsform in Körpern 25. Die Phasenwechselmaterialien sind Mischungen aus verschiedenen Stoffen, insbesondere aus Salzen wie Magnesiumchlorid und Magnesiumnitrat, wobei das Mischungsverhältnis in der Nähe des Eutektikums liegt. Da es sich um Phasenwechselmaterial 20 in den Körpern 25 handelt, nehmen diese Stoffe bei der Zufuhr von Wärmeenergie aus der Umgebung diese Wärmeenergie auf, ohne ihre eigene Temperatur zu erhöhen. Stattdessen wird diese aufgenommene Wärmeenergie in einen Phasenwechsel umgesetzt, mit anderen Worten, die Mischungen schmelzen, ohne dass sich dabei die Temperatur erhöht. Erst nach dem Schmelzen steigt dann die Temperatur der Mischungen des Phasenwechselmaterials 20 in den Körpern 25 an.

Dies führt dazu, dass die in einer bestimmten Schicht des Fluides 11 schwimmenden beziehungsweise liegenden Körper 25 bei einem Anstieg der Temperatur in dem Fluid in gerade dieser Schicht aufgrund des Einschichtens weiteren Fluides 11 aus den Leitungen 16 oder 17 diesen Temperaturanstieg zunächst in einen Phasenwechsel umsetzen, so dass die Temperatur in dieser Schicht des Fluides 11 nicht steigt, sondern aufgrund des Abziehens in die Körper 25 zunächst konstant bleibt.

Umgekehrt gilt ein ähnliches Verhalten, wenn die Temperatur in dem Fluid 11 in dem Behälter 10 in einer bestimmten Schicht fällt, etwa weil warmes Wasser über die Leitung 15 zu Heizungs- oder Warmwasserzwecken abgezogen wird und dementsprechend abgekühltes Wasser etwa über die Leitung 16 zurückgeführt wird und somit Wasser mit niedriger Temperatur das wärmere Wasser nach oben verdrängt. Hier kann jetzt die Mischung des Phasenwechselmaterials 20 im Inneren der Körper 25 wieder fest werden, etwa durch Kristallisation, und dabei ohne Verringerung der Temperatur die frei werdende Energie als Wärmeenergie in das umgebende Fluid wieder abgeben, das demnach seine Temperatur nicht senkt, sondern eine höhere Temperatur beibehält.

Die Vielzahl der Körper 25 innerhalb des Behälters 10 führt dazu, dass die Mehrzahl dieser Körper 25 gerade nicht an den entsprechenden Prozessen beteiligt ist, da nur diejenigen Körper 25 beziehungsweise das Phasenwechselmaterial 20 in diesen schmelzen beziehungsweise fest werden, bei denen die Schmelztemperatur des Phasenwechselmaterials 20 der Temperatur der Schicht des umgebenden Fluides 11 entspricht.

Insgesamt entsteht somit eine erhebliche zusätzliche Wärmekapazität innerhalb des Behälters 10 durch die in den Phasenwechselmaterialien 20 aufnehmbare und in den Phasenwechsel gehende Energie.

In besonderen Anwendungsfällen kann der Wärmespeicher mit dem Behälter 10 zusätzlich, nicht dargestellt, mit einem klassisch aufgebauten Zwischenspeicher versehen sein, beispielsweise einem Wasservorrat, der als vorerwärmte Teilmenge des Speichers in einem geeigneten Gefäß gelagert ist, welches auch in den Hauptspeicher integriert sein kann.

In diesem Fall ist derjenige Teil der Aufgabe des Phasenwechselmaterials, der die Wärme mit der für die jeweilige Anwendung hinreichenden Geschwindigkeit bereitstellt, geringer zu bewerten, als derjenige Teil der Aufgabe, mit dem die prinzipiell zeitlich unkritische Bereitstellung von Wärme erfolgt. In diesem Falle kann es aus Gründen der erhöhten Packungsdichte des Phasenwechselmaterials oder auch zur Einsparung von Verpackungsmaterial oder zur Erlangung einer günstigen Bauform oder aus anderen, hier typischen Gründen günstig sein, eine größere Materialdicke für das Phasenwechselmaterial zu wählen.

Eine größere Materialdicke in diesem Sinne könnte beispielsweise zwischen 3 cm und 50 cm liegen, vorzugsweise zwischen 10 cm und 25 cm. Bei eigenen Versuchen, die die vermuteten und zunächst hochgerechneten Werte noch überraschend positiv überboten, ist die Durchwärmung dieser dicken Schichten günstiger. Ein Grund dafür könnte darin liegen, dass über eine Thermosiphonwirkung eine interne Zirkulation im flüssigen Anteil des Phasenwechselmaterials entsteht, welche den Wärmetransport unterstützt.

In der **Figur 2** ist eine andere Ausführungsform dargestellt. Auch hier sieht man den Behälter 10 mit dem darin befindlichen Fluid 11, wobei heißes Fluid 11 oben durch die Abführleitung 15 abgezogen und abgekühltes Fluid unten durch die Rückführleitung 16 wieder in eine andere Schicht des Fluides 11 im Inneren des Behälters 10 zurückgeführt wird.

Hier befinden sich keine Körper 25 in dem Fluid 11, sondern stattdessen eine Speichererweiterung 30 in Form einer schalen- oder schichtenförmigen zusätzlichen Ummantelung außen auf dem Behälter 10.

Diese Speichererweiterung 30 enthält wiederum das Phasenwechselmaterial 20, also die Mischung verschiedener Stoffe im Bereich ihres Eutektikums.

Auch hier kann wiederum ein Solarkollektor angeschlossen werden und die anderen Möglichkeiten eines Wärmespeichers mit Behälter 10 und Fluid 11 genutzt werden. Hier tritt der Phasenwechsel des Phasenwechselmaterials 20 genau in jenem Bereich der Speichererweiterung 30 ein, der an diejenige Schicht des Fluides 11 angrenzt, die gerade die Temperatur besitzt, die der Schmelztemperatur des Phasenwechselmaterials 20 entspricht.

Dadurch, dass das Phasenwechselmaterial 20 in beiden Ausführungsformen der Figuren 1 und 2 gerade eine Mischung verschiedener Bestandteile mit einem Mischungsverhältnis im Bereich des Eutektikums ist, wird eine Entmischung der Bestandteile des Phasenwechselmaterials 20 vermieden, da alle Bestandteile gleichzeitig schmelzen beziehungsweise fest werden. Zugleich ist es möglich, sehr kostengünstige und vielfach zur Verfügung stehende Stoffe zu verwenden, die als Mischung schon zu ganz anderen Zwecken etwa im Düngemittelsektor im Markt sind oder gegebenenfalls nur leichterer Modifizierung bedürfen.

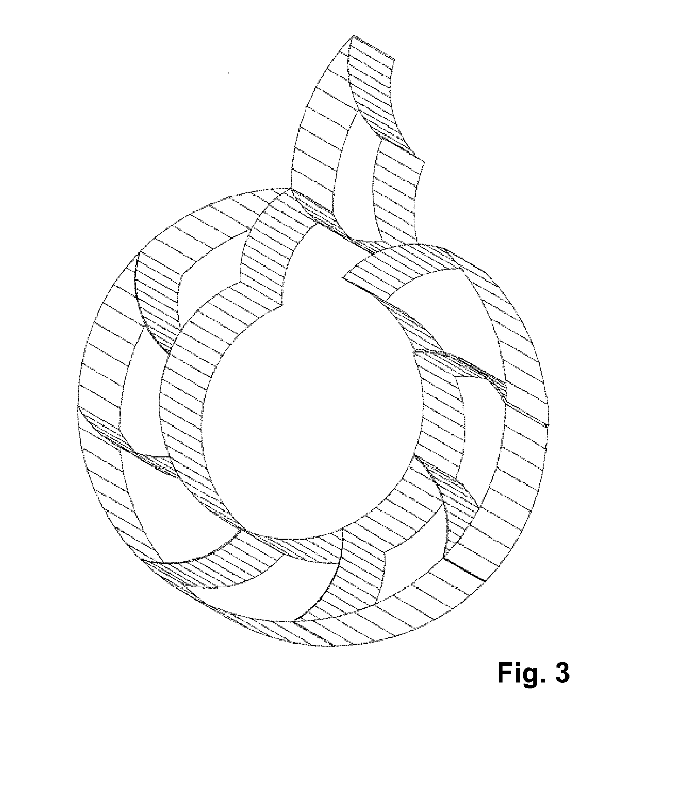

In der **Figur 3** ist eine dritte Ausführungsform der Erfindung schematisch in einem Teilabschnitt dargestellt.

Man sieht eine aus einem Wärmespeicher horizontal herausgeschnittene Scheibe. In dieser rein schematischen Darstellung ist eine Vielzahl von Elementen weggelassen, um die Unterschiede dieser Ausführungsform zu den anderen Ausführungsformen besser verdeutlichen zu können.

Im Zentrum ist der Behälter 10 zu denken, in dem sich das zu erwärmende Fluid 11 befindet. Dieser Behälter 10 erstreckt sich senkrecht durch die dargestellte Scheibe.

Außen auf dieser Behälterwandung ist nun eine Speichererweiterung 30 vorgesehen. Diese Speichererweiterung 30 besteht in der dargestellten Ausführungsform aus einer Art Schale mit acht Schalenelementen. Diese Schalenelemente sind untereinander gleich aufgebaut und besitzen jeweils in etwa die Form eines Parallelepipeds. Allerdings sind die Außenflächen des Parallelepipeds hier nicht ebene Flächen, sondern jeweils gebogen, um einerseits die üblicherweise runde Behälterwandung genau kontaktieren zu können und andererseits die üblicherweise ebenfalls als Kreisumfang gewünschte Außenwandung abbilden zu können. Neben diesen Flächen sind aber auch diejenigen beiden Flächen, die die links und rechts benachbarten Schalenelemente kontaktieren, als gebogene Flächen ausgebildet. Dies hat einen erheblichen Vorteil, wenn diese Elemente montiert werden sollen, wie sich noch im Folgenden näher ergibt.

Jedes dieser Elemente hat eine Abmessung von bevorzugt etwa einer Höhe von etwa 300 bis 400 mm, gesehen also in der vertikalen Richtung des Behälters 10. Die Breite, also die Abmessung in radialer Richtung zum Behälter, liegt zwischen etwa 150 mm und 250 mm.

Die Erstreckung in Umfangsrichtung des Behälters 10 liegt bei etwa 400 bis 500 mm. Da die Schale der Speichererweiterung 30 in der dargestellten Ausführungsform aus acht Schalenelementen besteht, ergibt sich hier insgesamt also ein Außenumfang des Wärmespeichers zwischen 3200 mm und 4000 mm.

Natürlich ist es möglich, andere Wärmespeicher mit anderen Behältern 10 aufzubauen, bei denen dann dazu passende Schalenelemente für eine Speichererweiterung 30 anderer Größenordnung vorgesehen werden.

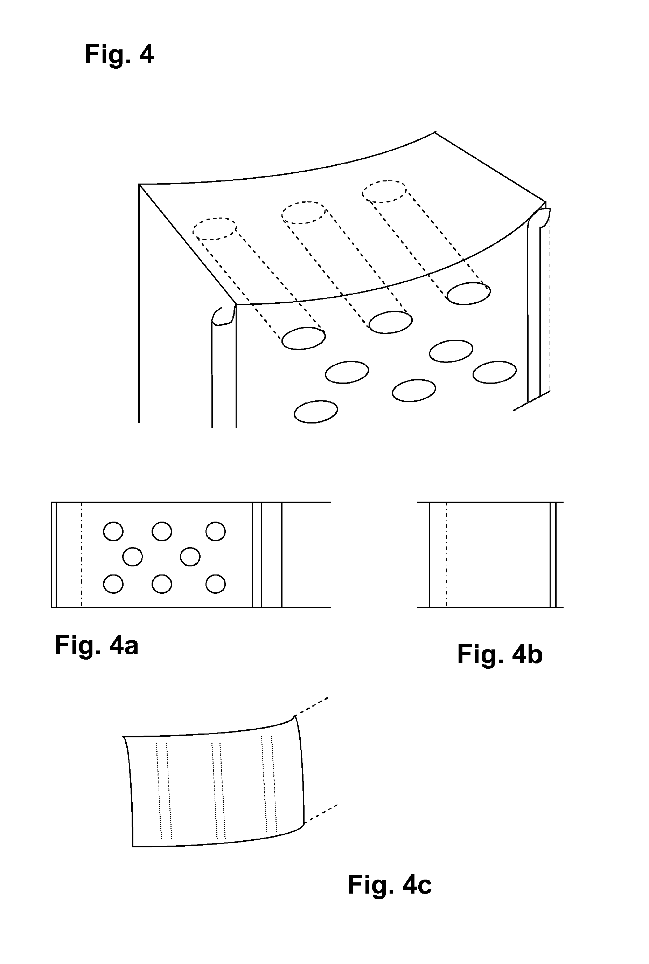

In der **Figur 4** ist eine perspektivische Darstellung eines Schalenelementes angegeben, wie es in leicht modifizierter Form in der Figur 3 zum Aufbau der dortigen Scheiben der Speichererweiterung verwendet ist.

Man sieht, dass das Schalenelement wieder mit den gebogenen Seiten versehen ist. An den im fertigmontierten Zustand äußeren beiden vertikalen Kanten sind jeweils Scharniere angebracht. Diese Scharniere erleichtern es, die Schalenelemente nebeneinander anzusetzen, wie schon in der Figur 3 angedeutet ist. Es ist dann möglich, nach dem Lösen des einen Scharniers das komplette Schalenelement um das andere Scharnier gegenüber dem Umfang der Speichererweiterung 30 zu drehen und es so besonders leicht montieren zu können.

Ferner sieht man in der Figur 4, dass horizontal durch das Schalenelement von innen nach außen Wärmeleiteinrichtungen führen. Diese sind insbesondere Stäbe aus vorzugsweise Graphit. Diese Stäbe führen also zwischen den Körpern 25 mit dem Phasenwechselmaterial 20 hindurch, die in dieser Figur zur Vereinfachung nicht dargestellt sind.

In der **Figur 4a** sieht man eine Ansicht von außen auf das Schalenelement aus Figur 4. Links und rechts sind die beiden Scharniere zu erkennen und man blickt auf die nach außen gerichteten Endseiten der Wärmeleiteinrichtungen.

In der **Figur 4b** ist ein Blick auf diejenige Seite gerichtet, mit der das Schalenelement an das benachbarte Schalenelement in der Figur 3 angrenzt.

In der **Figur 4c** ist eine Draufsicht angegeben. Man sieht hier insbesondere die gebogenen Seiten angedeutet. Die Wärmeleiteinrichtungen sind gestrichelt, da sie durch das Innere dieses Schalenelementes führen.

Diverse derartige Schalenelemente aus der Figur 4 bilden dann gemeinsam eine Schale für eine Speichererweiterung 30, wie sie in der Figur 3 im Schnitt als Scheibe dargestellt ist und wie sie sich in einer anderen Ausführungsform etwa aus der Figur 2 ergibt.

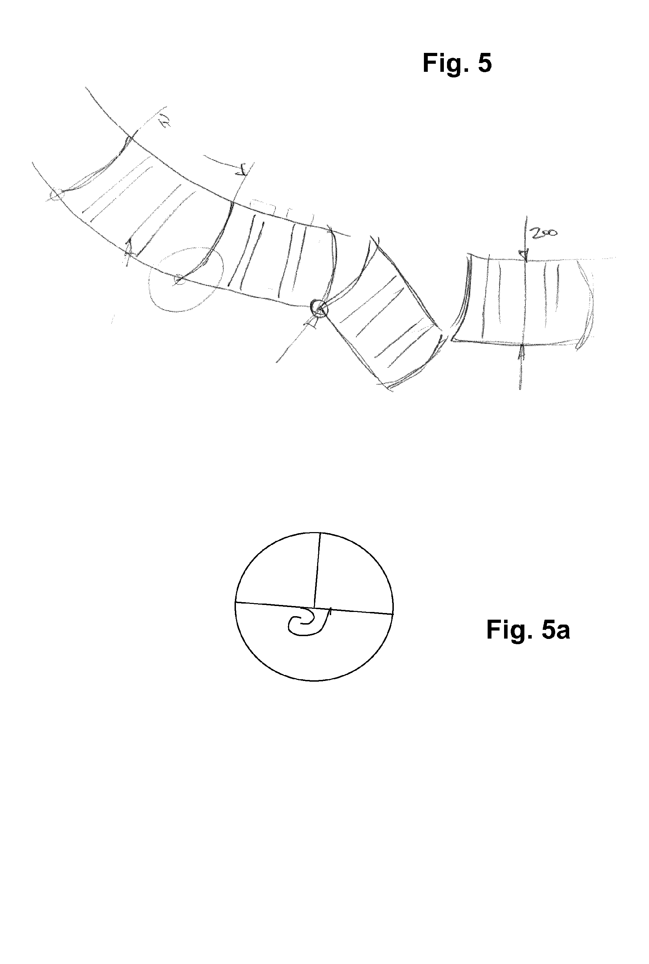

In der **Figur 5** ist in Draufsicht eine Kette aus vier Schalenelementen aus der

Figur 4 dargestellt, die jeweils in etwa den Anblick aus der Figur 4c bieten. Man sieht wiederum, dass die Schalenelemente im fertig montierten Zustand genau aneinander passen und dass für jedes dieser Schalenelemente horizontal die Wärmeleiteinrichtungen führen.

Eine dieser Schalenelemente, nämlich das zweite von rechts, ist aus der Reihe etwas herausgedreht. Dieses entspricht tatsächlich dem Zustand während der Montage. Die Drehung ist nämlich um das Scharnier erfolgt, mit dem dieses Schalenelement an das links daneben angeordnete Schalenelement angeschlossen ist, und zwar mittels eines Einhängescharniers.

Durch die gebogene Form der Außenseiten, mit denen die Schalenelemente aneinander angrenzen, ist eine Drehung um die senkrecht zur Blattebene stehenden Scharniere möglich.

Um dies noch deutlicher zu erläutern, ist vergrößert in der **Figur 5a** das Scharnier aus der Figur 5 raus gezeichnet.

Man kann den Bereich erkennen, an dem die beiden mittleren Schalenelemente aus der Figur 5 aneinander angrenzen und durch ein schematisches Einhängescharnier umeinander schwenkbar sind.

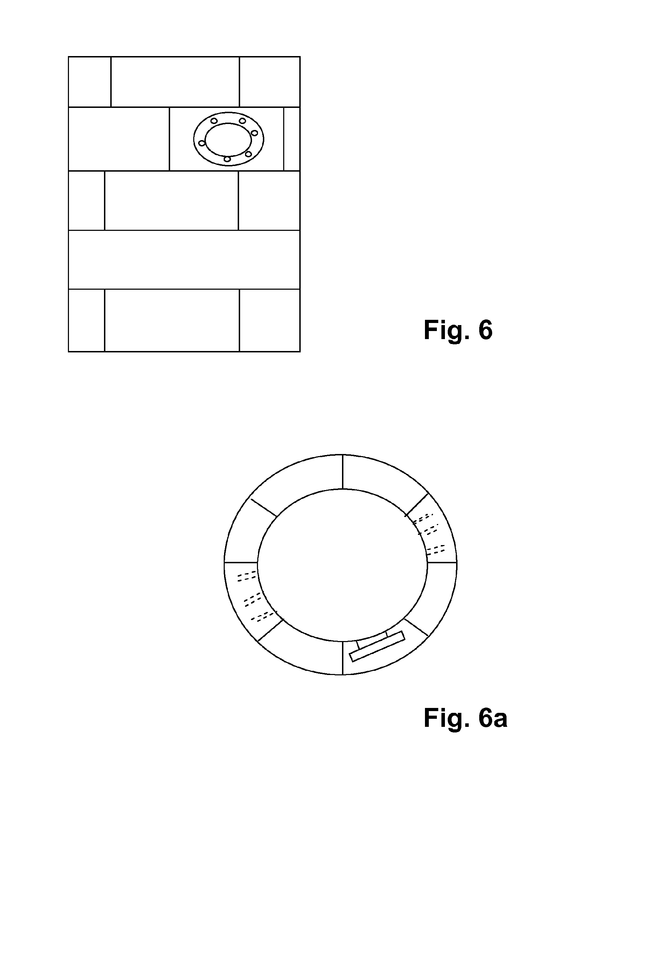

In der **Figur 6** ist eine vierte Ausführungsform der Erfindung dargestellt. Diese kann auch mit Schalenelementen, wie in der Ausführungsform in den Figuren 3 bis 5 dargestellt aufgebaut werden, aber auch mit anderen Schalenelementen einer Speichererweiterung 30.

In der dargestellten Ausführungsform ist aber insbesondere in einem der Schalenelemente eine Aussparung vorgesehen, nämlich für einen Flansch für einen Zusatz-Wärmeerzeuger. Hier kann ein Brenner oder dergleichen angeschlossen werden.

In der **Figur 6a** sieht man einen Schnitt durch die Ausführungsform aus der

Figur 6, und zwar horizontal durch diejenige Schicht, in der sich der Flansch für den Zusatz-Wärmeerzeuger befindet.

Diesen sieht man dementsprechend auch auf der in der Figur 6a unteren Seite.

Man sieht ferner auch, dass auch bei dieser Ausführungsform eine Aufteilung in etwa acht Schalenelemente auf den Umfang vorgenommen ist. Geht man von einem Behälter 10 für den Wärmespeicher mit einem Durchmesser von etwa 400 mm bis 700 mm aus, so ergibt sich in Umfangsrichtung wiederum eine Abmessung von Beispielsweise 450 mm. In radialer Richtung beträgt die Abmessung der Speichererweiterung 30 ungefähr 200 mm, und zwar auch bei den Schalenelementen abseits des Flansches für den Zusatz-Wärmeerzeuger. Andere Abmessungen sind denkbar, wenn eine größere oder kleinere Speichererweiterung 30 gewünscht wird.

In den einzelnen Speicherelementen befinden sich wiederum (nicht dargestellt) die sogenannten Latentelemente, also die Körper 25 mit den Mischungen aus dem Fasenwechselmaterial 20.

Angedeutet sind wiederum die Wärmeleiteinrichtungen, die auch bei dieser Ausführungsform vorgesehen werden können und horizontal durch die Schalenelemente führen. Diese Wärmeleitelemente können beispielsweise verkapselte Grafitstäbe sein.

Eine dünne Isolierung kann jeweils vorgesehen werden. Hierfür wird vorzugsweise eine Vakuumisolierung eingesetzt.

### Bezugszeichenliste

- 10: Behälter
- 11: Fluid
- 15: Abführleitung
- 16: Rückführleitung
- 17: Zufuhrleitung

- 20: Phasenwechselmaterial
- 25: Körper

- 30: Speichererweiterung

## Patentansprüche

1. Wärmespeicher,
mit einem teilweise mit Fluid (11) gefüllten Behälter (10),
mit einer Anordnung mit Phasenwechselmaterial (20),
welche zur Speicherung von Energie eingesetzt wird,
**dadurch gekennzeichnet,**
**dass** als Phasenwechselmaterial (20) eine Mischung aus zwei oder mehr Stoffen eingesetzt wird,
**dass** die Mischung ein Mischungsverhältnis aufweist, welches am Punkt des Eutektikums der beteiligten Stoffe oder innerhalb einer Abweichung von +/-50% davon bezüglich der Konzentrationen der beteiligten Stoffe liegt, und
**dass** die Mischung einen Schmelzpunkt im Bereich zwischen 50 °C und 70 °C aufweist.

2. Wärmespeicher nach Anspruch 1,
**dadurch gekennzeichnet,**
**dass** die Mischung ein Mischungsverhältnis aufweist, welches am Punkt des Eutektikums der beteiligten Stoffe oder innerhalb einer Abweichung von +/- 20% davon bezüglich der Konzentrationen der beteiligten Stoffe liegt.

3. Wärmespeicher nach Anspruch 2,
**dadurch gekennzeichnet,**
**dass** die Mischung ein Mischungsverhältnis aufweist, welches am Punkt des Eutektikums der beteiligten Stoffe oder innerhalb einer Abweichung von +/-10% davon bezüglich der Konzentrationen der beteiligten Stoffe liegt.

4. Wärmespeicher nach einem der vorstehenden Ansprüche,
**dadurch gekennzeichnet,**
**dass** die Mischung einen Schmelzpunkt im Bereich zwischen 52 °C und 65 °C aufweist.

5. Wärmespeicher nach einem der vorstehenden Ansprüche,
**dadurch gekennzeichnet,**
**dass** die Mischung eine Mischung von Salzen, insbesondere eine Mischung aus Magnesiumchlorid und Magnesiumnitrat, ist.

6. Wärmespeicher nach einem der vorstehenden Ansprüche,
**dadurch gekennzeichnet,**
**dass** in dem Behälter (10) innerhalb des Fluides (11) eine Vielzahl von gegenüber dem Fluid (11) dicht abgeschlossenen, mit diesem aber wärmeleitend in Verbindung stehenden Körpern (25) vorgesehen ist,
**dass** die Körper (25) einen inneren Hohlraum aufweisen, und
**dass** der Hohlraum zumindest teilweise mit der Mischung mit dem Phasenwechselmaterial gefüllt ist.

7. Wärmespeicher nach Anspruch 6,
**dadurch gekennzeichnet,**
**dass** die Körper (25) eine elastische Hülle aufweisen, deren Elastizität so bemessen ist, dass sie den Volumenänderungen der Mischung des Phasenwechselmaterials (20) folgen kann.

8. Wärmespeicher nach Anspruch 7,
**dadurch gekennzeichnet,**
**dass** die elastische Hülle der Körper (25) einen gegenüber dem Fluid diffusionsdichten Aufbau besitzt.

9. Wärmespeicher nach einem der Ansprüche 6 bis 8,
**dadurch gekennzeichnet,**
**dass** die Körper (25) in dem Behälter (10) waagerecht liegend und insbesondere unbeweglich angeordnet sind, und
**dass** jeder Körper (25) von Fluid (11) umgeben ist.

10. Wärmespeicher nach einem der Ansprüche 6 bis 8,
**dadurch gekennzeichnet,**
**dass** die Körper (25) in dem Behälter (10) senkrecht stehend und insbesondere auf einer Stützkonstruktion angeordnet sind, und
**dass** jeder Körper (25) von Fluid umgeben ist.

11. Wärmespeicher nach einem der Ansprüche 6 bis 10,
**dadurch gekennzeichnet,**
**dass** der überwiegende Teil der Körper (25) einen Durchmesser zwischen 0,5 cm und 3 cm aufweist, insbesondere einen Durchmesser zwischen 0,6 cm und 1,7 cm.

12. Wärmespeicher nach einem der Ansprüche 6 bis 11,
**dadurch gekennzeichnet,**
**dass** einige Körper (25) einen Durchmesser zwischen 3 cm und 50 cm aufweisen, insbesondere einen Durchmesser zwischen 10 cm und 25 cm, und
**dass** diese Körper sich in einem Sondergefäß oder einem bestimmten Bereich des Behälters (10) befinden.

13. Wärmespeicher nach einem der Ansprüche 6 bis 12,
**dadurch gekennzeichnet,**
**dass** jeder Körper (25) eine Hülle aus mehreren Schichten aufweist, insbesondere mit einer mittleren metallischen Schicht oder Folie und mit jeweils außen die mittlere metallische Schicht vollständig abdeckenden Schichten aus Kunststoff oder aus Gummi, insbesondere aus Polyethylen, Polypropylen, Polyamid, Polyethylenterephthalat, Polyacrylamid, AcrylnitrilButadien-Styrol-Copolymerisat (ABS) oder Polystyrol.

14. Wärmespeicher nach einem der vorstehenden Ansprüche,
**dadurch gekennzeichnet,**
**dass** das Phasenwechselmaterial (20) in unterschiedliche Niveauebenen des Behälters (10) jeweils anders zusammengesetzt und/oder aus anderen Stoffen aufgebaut ist.

15. Wärmespeicher nach Anspruch 14,
**dadurch gekennzeichnet,**
**dass**
im oberen Bereich, insbesondere im oberen Drittel, des Wärmespeichers Körper (25) mit einem Phasenwechselmaterial (20) eingesetzt werden, welches aus Mischungen besteht, die einen Schmelzpunkt im Bereich zwischen 50 °C und 110 °C, vorzugsweise von zwischen 60 °C und 95 °C aufweisen.

16. Wärmespeicher nach einem der vorstehenden Ansprüche,
**dadurch gekennzeichnet,**
**dass** als Phasenwechselmaterial (20) oder jedenfalls als eines von mehreren Phasenwechselmaterialien eine unterkühlte Schmelze eingesetzt wird, die ihren Aggregatzustand durch mechanische schnelle Bewegung oder Kavitation oder elektrische Pulsanregung aus einer flüssigen in eine feste Form ändert.

17. Wärmespeicher nach einem der vorstehenden Ansprüche,
**dadurch gekennzeichnet,**
**dass** der Behälter (10) mit einer außerhalb oder innerhalb des Behälters angebrachten, mit diesem aber thermisch in Verbindung stehenden Speichererweiterung (30) versehen ist, und
**dass** die Speichererweiterung (30) mit der Mischung des Phasenwechselmaterials (20) vollständig oder teilweise gefüllt ist.

18. Wärmespeicher nach Anspruch 17,
**dadurch gekennzeichnet,**
**dass** die Speichererweiterung (30) aus beutelförmigen Körpern (25) aufgebaut ist.

19. Wärmespeicher nach Anspruch 17 oder 18,
**dadurch gekennzeichnet,**
**dass** die Speichererweiterung (30) als Schicht oder als eine oder mehrere Schalenelemente ausgebildet ist.

20. Wärmespeicher nach einem der Ansprüche 18 oder 19,
**dadurch gekennzeichnet,**
**dass** die Speichererweiterung (30) aus mehreren teilzylinderförmigen Schalen, insbesondere aus zwei halbzylinderförmigen Schalen, gefüllt mit der Mischung des Phasenwechselmaterials aufgebaut ist.

21. Wärmespeicher nach Anspruch 19 oder 20,
**dadurch gekennzeichnet,**
**dass** eine oder mehrere oder alle Schalen oder Schalenelemente als Teilelemente ausgebildet sind, insbesondere als Parallelepiped, insbesondere modifiziert durch gebogen ausgebildete Außenflächen zur Bildung eines Kreisumfangs für die Schale oder Schalenelemente, bevorzugt mit Abmessungen der Teilelemente so, dass sie eine Breite zwischen 150 und 250 mm, eine Höhe von 300 bis 400 mm und eine Erstreckung in Umfangsrichtung des Behälters (10) von 400 bis 500 mm aufweisen.

22. Wärmespeicher nach einem der Ansprüche 19 bis 21,
**dadurch gekennzeichnet,**
**dass** die Schalen, Schalenelemente oder Teilelemente mit Montage erleichternden Verschlusseinrichtungen ausgestattet sind, insbesondere mit Scharnieren.

23. Wärmespeicher nach einem der Ansprüche 17 bis 22,
**dadurch gekennzeichnet,**
**dass** durch die Speichererweiterung (30) Wärmeleiteinrichtungen führen, insbesondere Stäbe aus vorzugsweise Graphit, die von der Wand des Behälters (10) nach außen führen.

24. Wärmespeicher nach einem der vorstehenden Ansprüche,
**dadurch gekennzeichnet,**
**dass** Körper (25) mit Mischungen des Phasenwechselmaterials (20) um Zuführungs- und Abführungsrohrleitungen angeordnet sind.

25. Wärmespeicher nach einem der vorstehenden Ansprüche,
**dadurch gekennzeichnet,**
**dass** im unteren Bereich, insbesondere im unteren Drittel, des Wärmespeichers Körper (25) mit einem Phasenwechselmaterial (20) eingesetzt werden, welches aus Mischungen besteht, die einen Schmelzpunkt im Bereich zwischen 5 °C und 50 °C, vorzugsweise zwischen 30 °C und 50 °C aufweisen.
